# EUROPEAN PATENT APPLICATION

(11) **EP 1 885 069 A1**
(43) Date of publication of application: **06.02.2008**
(21) Application number: 07015312.7
(22) Date of filing: 03.08.2007
(51) Int. Cl.: H03M 13/41

(54) **Decoding in consideration of known information bits**

(30) Priority: 03.08.2006 KR 20060073231
(71) Applicant: Samsung Electronics Co., Ltd., Yeongtong-gu Suwon-si, Gyeonggi-do (KR)
(72) Inventor: Song, Seong-Wook, Gyeonngi-do (KR); Kim, Sung-Soo, Seoul (KR); Gil, Gang-Mi, Gyeonggi-do (KR); Kim, Hun-Kee, Seoul (KR)
(74) Representative: Lang, Johannes

(57) **Abstract**

Provided are a decoder and decoding method wherein decoding is performed in consideration of input message characteristics. The decoder includes a fixed information checking unit for checking whether input data corresponds to fixed information; and a Branch Metric Calculation (BMC) unit for allowing the fixed information checking unit to check whether the input data corresponds to the fixed information upon receiving the input data, and if the input data corresponds to the fixed information, for computing branch metrics for a path by the use of the fixed information. Accordingly, error correction is improved.

## Description

### CROSS-REFERENCE TO RELATED PATENT APPLICATION

This application claims the benefit under 35 U.S.C. § 119(a) of Korean Patent Application No. 2006-0073231, filed August 3, 2006, in the Korean Intellectual Property Office, the entire disclosure of which is hereby incorporated by reference.

### BACKGROUND OF THE INVENTION

### Field of the Invention

The present invention relates to a decoder and decoding method in which decoding is performed in consideration of input message characteristics. More particularly, the present invention relates to a decoder and decoding method in which an encoded message is decoded with less error by using fixed information of the input message.

### Description of the Related Art

Typically, a Viterbi decoder is used to correct errors caused by noise in a mobile communication channel. After data is encoded into a convolutional code, the Viterbi decoder is used to decode the data according to a Viterbi algorithm employing a maximum likelihood decoding scheme. In the Viterbi algorithm, an input data sequence is compared with a predefined symbol sequence of an encoder, so as to select a most likely path. Then, the input data is decoded using the selected path.

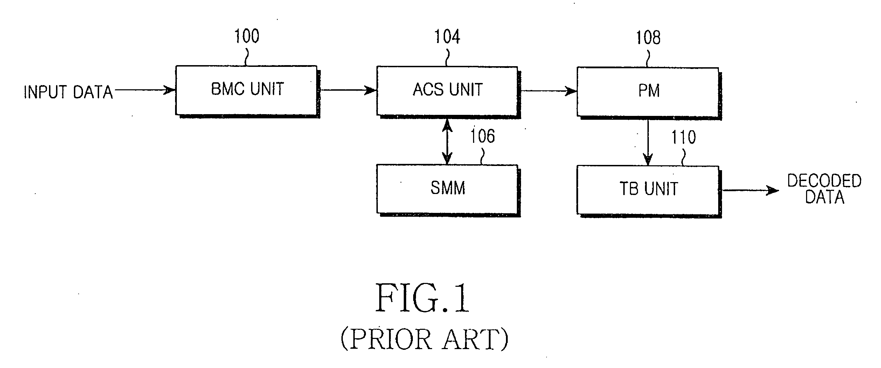

FIG. 1 is a block diagram of a conventional Viterbi decoder. Referring to FIG. 1, the conventional Viterbi decoder includes a Branch Metric Calculation (BMC) unit 100, an Add-Compare-Selection (ACS) unit 104, a State Metric Memory (SMM) 106, a Path Memory (PM) 108, and a Trace Back (TB) unit 110.

Upon receiving input data, the BMC unit 100 computes branch metrics by calculating a likelihood between the input data sequence and a predefined symbol sequence that can be output from an encoder. Since the likelihood is calculated only for the current input data, in order to consider a state transition occurring by previous data, the likelihood for all input data symbols received so far is measured by adding state metrics indicating the likelihood between the previous input data sequence and the predefined symbol sequence. When the branch metrics computed by the BMC unit 100 and a previous state metric stored in the SMM 106 are received, the ACS unit 104 computes the likelihood between the input data symbols received so far and the predefined symbol sequence by performing adding and comparison operations, and selects a most likely path (survivor path). Then, a state metric of the selected survivor path is computed so that the next input data can be used by the ACS unit 104. Information on the selected survivor path is stored in the PM 108, and the computed state metric is stored in the SMM 106.

The TB unit 110 finds the most likely path for the input data by using the survivor path information stored in the PM 108, and outputs data decoded using the most likely path.

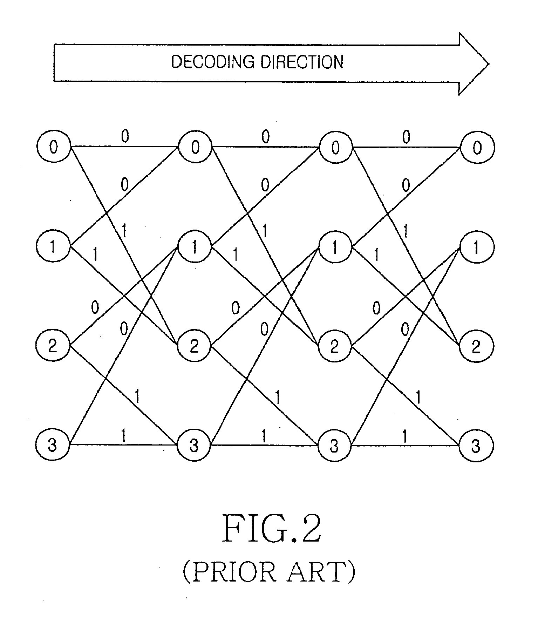

FIG. 2 illustrates an example of possible paths when using the conventional Viterbi decoder. The tree structure of FIG. 2 is referred to as a trellis tree. Herein, branch metrics of input data are computed by the BMC unit 100, and a predefined symbol sequence that can be output from an encoder is shown in the figure.

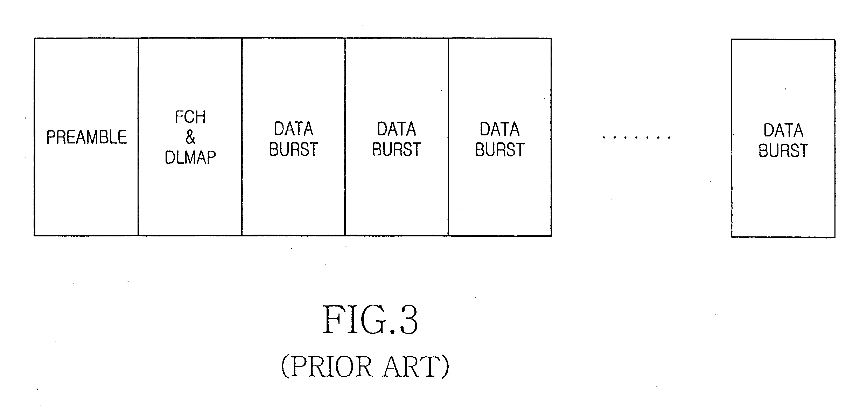

Now, a decoding operation using an Orthogonal Frequency Division Multiple Access (OFDMA) scheme will be described with reference to FIG. 3.

FIG. 3 illustrates a frame structure used in the conventional OFDMA scheme. Referring to FIG. 3, the OFDMA frame includes a preamble, which contains a Pseudo- Noise (PN) code to distinguish cells and segments, Frame Control Header (FCH) information, Downlink MAP (DL-MAP) information, and data bursts.

The FCH information and the DL-MAP information are relatively more important that the data bursts. This is because the data bursts can be retransmitted and recovered using an Automatic Repeat reQuest (ARQ) scheme or the like when transmission is not successfully made, whereas communication may be disconnected when transmission of the FCH information and the DL-MAP information is not successfully made.

On the transmitting end of the OFDMA system, the FCH information is encoded into a convolutional code at a code rate of 1/2. After repeating this coding process 4 times, the resultant code is transmitted to a receiving end. Upon receiving the FCH information, the receiving end decodes it by the aid of a Viterbi decoder.

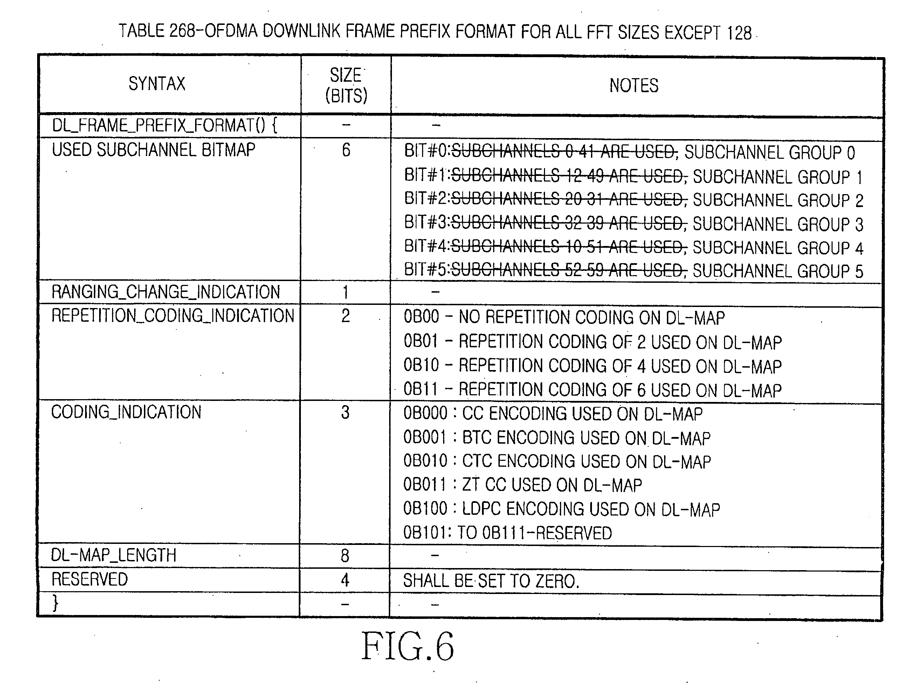

The FCH information received by the receiving end may be fixed information that can be known without decoding or may be predefined fixed information. However, decoding has conventionally been performed without considering which type of information is received. Details of such types of information will be described later with reference to FIG. 6.

Accordingly, there is a demand for an improved decoding method in which decoding is performed using fixed information that can be known before decoding.

### SUMMARY OF THE INVENTION

Exemplary embodiments of the present invention address at least the above problems and/or disadvantages and provide at least the advantages described below. Accordingly, an aspect of an exemplary embodiment of the present invention is to provide a decoder and decoding method in which decoding is performed in consideration of input message characteristics.

Exemplary embodiments of the present invention also provide a decoder and decoding method in which an encoded message is decoded with less error by using fixed information of a message input to an encoder.

Exemplary embodiments of the present invention also provide a decoder and decoding method in which Frame Control Header (FCH) information is decoded with less error by using fixed information that can be known without decoding and without predefined fixed information.

According to an aspect of exemplary embodiments of the present invention, there is provided a decoder for decoding data in consideration of input message characteristics, comprising a fixed information checking unit for checking whether input data corresponds to fixed information; and a Branch Metric Calculation (BMC) unit for allowing the fixed information checking unit to check whether the input data corresponds to the fixed information upon receiving the input data, and if the input data corresponds to the fixed information, for computing branch metrics for a path by the use of the fixed information.

According to another aspect of exemplary embodiments of the present invention, there is provided a decoding method in which data is decoded in consideration of input message characteristics, comprising the steps of receiving input data to be decoded; checking whether the input data corresponds to fixed information; and if the checking result shows that the input data corresponds to the fixed information, computing branch metrics for a possible path by the use of the fixed information.

### BRIEF DESCRIPTION OF THE DRAWINGS

The above and other aspects, features and advantages of certain exemplary embodiments of the present invention will become more apparent from the following detailed description taken in conjunction with the accompanying drawings, in which:

FIG. 1 is a block diagram of a conventional Viterbi decoder;

FIG. 2 illustrates an example of possible paths when using the conventional Viterbi decoder;

FIG. 3 illustrates a frame structure used in a conventional Orthogonal Frequency Division Multiple Access (OFDMA) scheme;

FIG. 4 is a block diagram of a decoder according to and exemplary embodiment of the present invention;

FIG. 5 illustrates an example of possible paths when using a decoder according to an exemplary embodiment of the present invention;

FIG. 6 is a table describing an OFDMA Frame Control Header (FCH) conforming to the 802.16e standard according to an exemplary embodiment of the present invention;

FIG. 7 is a flowchart illustrating an operation of a decoder according to an exemplary embodiment of the present invention; and

FIG. 8 is a graph illustrating performance of a decoder of an exemplary embodiment of the present invention with respect to performance of a conventional decoder.

### DETAILED DESCRIPTION OF PREFERRED EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

An exemplary embodiment of the present invention will be described herein below with reference to the accompanying drawings.

An exemplary embodiment of the present invention relates to a decoder and decoding method in which an encoded message is decoded with less error by using fixed information of a message input to an encoder.

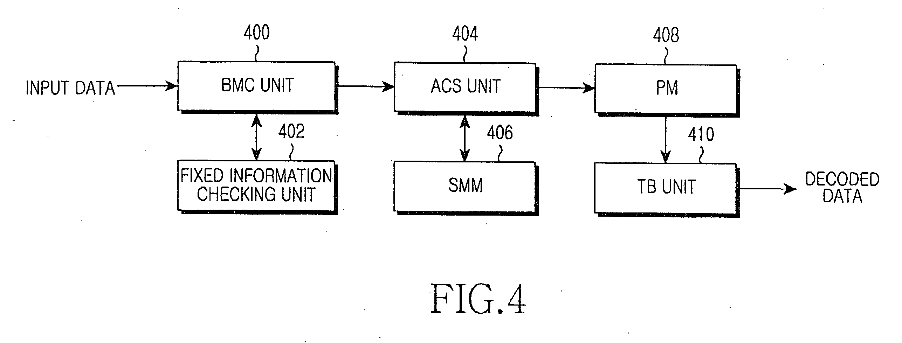

FIG. 4 is a block diagram of a decoder according to an exemplary embodiment of the present invention. Referring to FIG. 4, the decoder includes a Branch Metric Calculation (BMC) unit 400, a fixed information checking unit 402, an Add-Compare-Selection (ACS) unit 404, a State Metric Memory (SMM) 406, a Path Memory (PM) 408, and a Trace Back (TB) unit 410.

Upon receiving input data, the BMC unit 400 allows the fixed information checking unit 402 to check whether the input data corresponds to fixed information. If the input data corresponds to the fixed information, the BMC unit 400 computes branch metrics for a possible path that can be formed by an encoder through the use of the fixed information. Otherwise, the BMC unit 400 computes branch metrics for all possible paths that can be formed by the encoder.

According to the request of the BMC unit 400, the fixed information checking unit 402 checks whether the input data corresponds to fixed information that can be known without decoding or without predefined fixed information conforming the 802.16e standard. If the input data corresponds to any one of the fixed information, the fixed information checking unit 402 outputs the resultant information to the BMC unit 400.

When the branch metrics computed by the BMC unit 400 and a previous state metric stored in the SMM 406 are received, addition and comparison are performed by the ACS unit 404 so as to select a survivor path which is most like the predefined symbol sequence, and a state metric of the selected survivor path is computed. Information on the selected survivor path is stored in the PM 408, and the computed state metric is stored in the SMM 406.

The TB unit 410 finds a most likely path for the input data by using the survivor path information stored in the PM 408, and outputs data decoded using the most likely path.

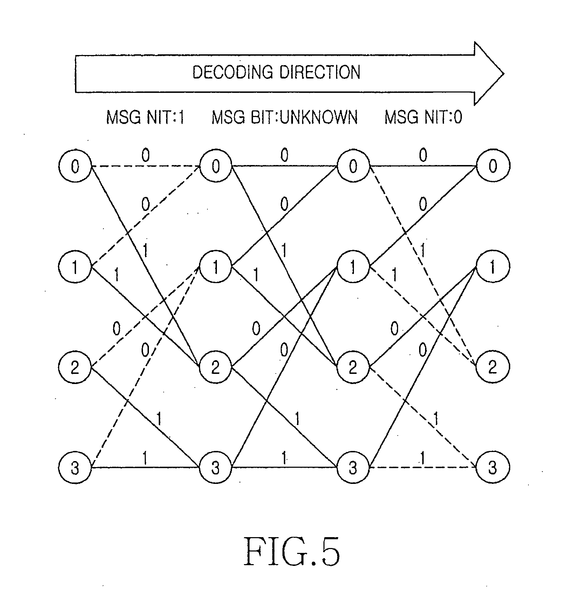

FIG. 5 illustrates an example of possible paths when using a decoder according to an exemplary embodiment of the present invention. In a trellis tree of FIG. 5, a path which cannot be formed using fixed information (as indicated by dotted line) is ignored.

An example of the fixed information which is checked by the fixed information checking unit 402 will be explained with reference to FIG. 6. FIG. 6 is a table describing an OFDMA FCH conforming to the 802.16e standard.

Referring to FIG. 6, a 24-bit FCH is composed of a 6-bit used sub-channel bitmap field indicating which sub-channel set is allocated to a Partial Usage of Sub-Channel (PUSC) zone, a 1-bit Ranging_Change_Indication flag field indicating whether allocation for periodic ranging/BW request is modified in a current frame, a 2-bit Repetition_Coding_Indication field indicating the number of times of performing coding operations for DL-MAP transmission, a 3-bit Coding_Indication field indicating an encoding method used for DL-MAP transmission (herein, DL-MAP is transmitted at a QPSK 1/2 code rate), an 8-bit DL-Map_Length field indicating the length of a DL-MAP message followed by a DL_Frame_Prefix, and a 4-bit reserved field. Details of the FCH are disclosed in the 802.16e standard.

The fixed information of the FCH will now be described. The 6-bit used sub-channel bitmap is information on a sub-channel set used by a Base Station (BS) that communicates with a receiver. In this case, each segment is allocated with at least two sub-channel sets that can be known before the FCH is decoded in a mobile terminal. In practice, the fixed sub-channel sets are frequently allocated to segments through negotiation between a service provider and a network or mobile terminal manufacturer. Therefore, the 6-bit used sub-channel bitmap is fixed information that can be obtained by detecting a segment ID without having to decoding the FCH.

Regarding the 3-bit Coding indication field, an available coding method is determined through negotiation with a service provider, so that only necessary decoder can be supported in order to simplify a chip design of a mobile terminal. For example, in the Wibro service currently being evaluated in the domestic market of Korea, only a convolutional code (CC) '000' and a convolutional turbo code (CTC) '010' are supported. In this structure, since the first and third bits are fixed, the decoder decodes only the second bit to know a coding type. In the 3-bit Coding indication field, it can be said that the two bits are fixed information.

The 4-bit reserved field is not defined yet and is fixed to 0. Thus, it is fixed information which can be known without decoding.

Thus, in the OFDMA FCH, a total size of the fixed information is 12 bits which includes the 6-bit of used sub-channel bitmap field, 2 bits of the 3-bit Coding indication field, and the 4-bit reserved fields.

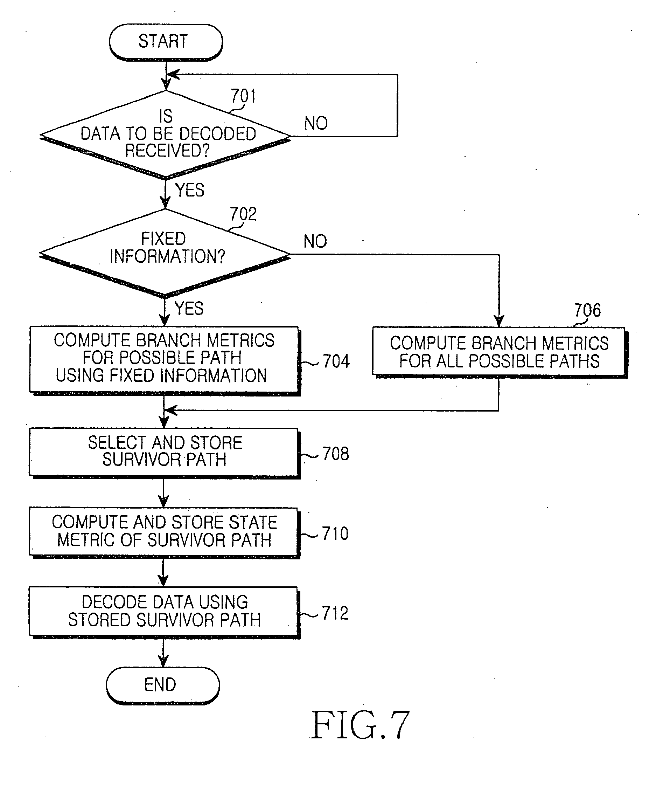

A decoding method in which decoding is performed in consideration of input message characteristics according to an exemplary embodiment of the present invention will now be described with reference to FIG. 7.

FIG. 7 is a flowchart illustrating an operation of a decoder according to an exemplary embodiment of the present invention. Referring to FIG. 7, in step 701, input data to be decoded is received. Then, in step 702, it is checked whether the input data corresponds to fixed information. If the checking result shows that the input data corresponds to the fixed information, in step 704, branch metrics are computed for a possible path by the use of the fixed information. Otherwise, the procedure goes to step 706, and branch metrics are computed for all possible paths.

In step 708, the branch metrics are added to a previous state metric stored, and the computation results are computed so that a survivor path which is the most likely path for the input data is selected and stored. In step 710, a state metric of the selected survivor path is computed and stored. In step 712, the data is decoded using information on the stored survivor path.

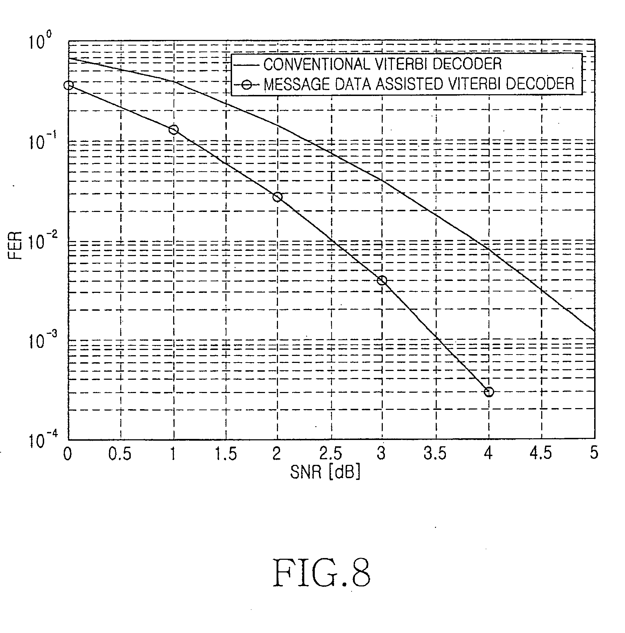

Now, performance of a decoder of an exemplary embodiment of the present invention will be compared with performance of a conventional decoder with reference to FIG 8. FIG. 8 is a graph illustrating performance of the decoder of an exemplary embodiment of the present invention with respect to performance of the conventional decoder. In the graph of FIG. 8, decoding is performed 10,000 times to measure a Frame Error Rate (FER) under the assumption that a frame error occurs when an error is detected from input data except for fixed information. Herein, a convolutional code is set to an FCH format, a coding coefficient is set to octal numbers (171 and 133), the number of memories is set to 6, a code rate is set to 1/2, a modulation method is set to Binary Phase Shift Key (BPSK), and a channel condition is set to an Additive White Gaussian Noise (AWGN) condition.

Referring to FIG. 8, the decoder of an exemplary embodiment of the present invention has a performance gain higher than the conventional decoder by 1.5dB or more when FER=0.001 is set to a reference point.

According to an exemplary embodiment of the present invention, a decoder and decoding method are provided in which decoding is performed using the fixed information of a message input to an encoder. Therefore, there is an advantage in that error correction can be further improved in comparison with the conventional decoding method.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While certain exemplary embodiments of the invention have been shown and described with reference to certain preferred embodiments thereof, it will be understood by those skilled in the art that various changes in form and details may be made therein without departing from the spirit and scope of the invention as defined by the appended claims and their equivalents.

## Claims

1. A decoder for decoding data in consideration of input message characteristics, comprising:
a fixed information checking unit for checking whether input data corresponds to fixed information; and
a Branch Metric Calculation (BMC) unit for allowing the fixed information checking unit to check whether the input data corresponds to the fixed information upon receiving the input data, and if the input data corresponds to the fixed information, for computing branch metrics for a path by the use of the fixed information.

2. The decoder of claim 1, wherein, if the input data does not correspond to the fixed information, the BMC unit computes the branch metrics for all possible paths.

3. The decoder of claim 1, further comprising:
a State Metric Memory (SMM) for storing a state metric;
a Path Memory (PM) for storing a selected survivor path;
a Add-Compare-Select (ACS) unit for adding the branch metrics output from the BMC unit and a previous state metric stored in the SMM, comparing the adding result, selecting a survivor path which is most like the input data, storing information on the selected survivor path, computing a state metric of the selected survivor path, and storing information on the state metric of the selected survivor path in the SMM; and
a Trace Back (TB) unit for outputting data decoded using the selected survivor path information stored in the PM.

4. The decoder of claim 1, wherein the fixed information is either data that can be known without decoding or predefined data.

5. The decoder of claim 1, wherein the fixed information is defined in an Orthogonal Frequency Division Multiple Access (OFDMA) Frame Control Header (FCH) conforming to the 802.16(e) standard.

6. A decoding method in which data is decoded in consideration of input message characteristics, comprising the steps of:
receiving input data to be decoded;
checking whether the input data corresponds to fixed information; and
if the input data corresponds to the fixed information, computing branch metrics for a possible path by the use of the fixed information.

7. The method of claim 6, wherein, if the checking result shows that the input data does not correspond to the fixed information, computing branch metrics for all possible paths.

8. The method of claim 6, after the step of computing branch metrics, further comprising:
adding the branch metrics and a stored previous state metric, comparing the adding result, and selecting a survivor path which is most like the input data;
computing and storing a state metric of the selected survivor path; and
outputting data decoded using information on the state metric of the selected survivor path.

9. The method of claim 6, wherein the fixed information is either data that can be known without decoding or predefined data.

10. The method of claim 6, wherein the fixed information is defined in an Orthogonal Frequency Division Multiple Access (OFDMA) Frame Control Header (FCH) conforming to the 802.16(e) standard.

11. A decoder for data decoding in consideration of input message characteristics, comprising the steps of:
means for receiving input data to be decoded;
means for checking whether the input data corresponds to fixed information; and
means for computing branch metrics for a possible path by the use of the fixed information if the input data corresponds to the fixed information.

12. The decoder of claim 11, wherein means for computing the branch metrics computes the branch metrics for all possible paths if the checking result shows that the input data does not correspond to the fixed information.

13. The decoder of claim 11, further comprising:
means for adding the branch metrics and a stored previous state metric, comparing the adding result, and selecting a survivor path which is most like the input data;
means for computing and storing a state metric of the selected survivor path; and
means for outputting data decoded using information on the state metric of the selected survivor.

14. The decoder of claim 11, wherein the fixed information is either data that can be known without decoding or predefined data.

15. A computer-readable recording medium having recorded thereon a program for decoding data in consideration of input message characteristics, comprising:
a first code segment, for receiving input data to be decoded;
a second code segment, for checking whether the input data corresponds to fixed information; and
a third code segment, for computing branch metrics for a possible path by the use of the fixed information if the input data corresponds to the fixed information.
